# EUROPEAN PATENT APPLICATION

(11) **EP 4 412 107 A1**
(43) Date of publication of application: **07.08.2024**
(21) Application number: 24153000.5
(22) Date of filing: 19.01.2024
(51) Int. Cl.: H04B 7/185

(54) **METHOD AND DEVICE FOR COMMUNICATING USING MULTIPLE SATELLITES IN NON-TERRESTRIAL NETWORK**

(30) Priority: 19.01.2023 KR 20230008165; 11.07.2023 KR 20230090024
(71) Applicant: Samsung Electronics Co., Ltd., Suwon-si, Gyeonggi-do 16677 (KR)
(72) Inventor: KIM, Kiil, 16677 Suwon-si (KR); KIM, Jinho, 16677 Suwon-si (KR); BANG, Jonghyun, 16677 Suwon-si (KR); KIM, Mingoo, 16677 Suwon-si (KR); DO, Joohyun, 16677 Suwon-si (KR); LEE, Jungwon, 16677 Suwon-si (KR); Huiwon, JE, 16677 Suwon-si (KR)
(74) Representative: Marks & Clerk LLP

(57) **Abstract**

An operating method of a base station includes obtaining location information from a satellite serving a user terminal, based on the location information, generating satellite group information including information about satellites in a satellite group, providing the satellite group information to the user terminal, determining a primary satellite among the satellites in the satellite group based on one or more of report information that is received from the user terminal and satellite information of each of the satellites in the satellite group, and providing information indicating the primary satellite to the user terminal.

## Description

### BACKGROUND

Methods and devices consistent with the present disclosure relate to a communication method and device, and more specifically, to a communication method and device using multiple satellites in a non-terrestrial network.

As a next-generation mobile communication system, satellite communication systems are being researched and developed to overcome the coverage limitations of existing terrestrial networks. A satellite communication system is expected to be able to provide low-capacity data, and voice and video streaming services, etc. to users through satellites in areas where it is difficult to provide the services through existing terrestrial networks.

Unlike existing mobile communication systems where there are only connections between base stations and terminals, satellite communication systems have connections between base stations and satellites and between satellites and terminals. Therefore, efficient satellite operation is required in satellite communication systems.

### SUMMARY

It is an aspect to provide a communication method and device that improve the connectivity and data throughput of a user terminal by utilizing multiple satellites including a primary satellite and a secondary satellite.

According to an aspect of one or more embodiments, there is provided an operating method of a base station, the operating method comprising obtaining location information from a satellite serving a user terminal; based on the location information, generating satellite group information including information about a plurality of satellites in a satellite group; transmitting the satellite group information to the user terminal; determining a primary satellite among the plurality of satellites in the satellite group based on at least one of report information that is received from the user terminal and satellite information of each of the plurality of satellites in the satellite group; and providing information indicating the primary satellite to the user terminal.

According to another aspect of one or more embodiments, there is provided a base station device comprising a wireless communication circuit configured to obtain location information from a satellite serving a user terminal; a control circuit configured to generate satellite group information including information about a plurality of satellites in a satellite group, based on the location information; and a memory configured to store the satellite group information, wherein the control circuit further comprises a multi-satellite management circuit configured to transmit the satellite group information to the user terminal, determine a primary satellite among the plurality of satellites based on at least one of report information that is received from the user terminal and satellite information about each of the plurality of satellites in the satellite group, and provide information indicating the primary satellite, to the user terminal.

According to yet another aspect of one or more embodiments, there is provided a non-terrestrial network system comprising a plurality of satellites; a user terminal that communicates with the plurality of satellites through a service link; and a base station that communicates with the user terminal through the plurality of satellites and a feeder link, wherein the base station is configured to obtain location information from a satellite serving the user terminal, generate satellite group information including information about a plurality of satellites in a satellite group, based on the location information, transmit the satellite group information to the user terminal, determine a primary satellite among the plurality of satellites in the satellite group based on at least one of report information that is received from the user terminal and satellite information about each of the plurality of satellites in the satellite group, and provide information indicating the primary satellite, to the user terminal.

At least some of the above and other features of the invention are set out in the claims.

### BRIEF DESCRIPTION OF THE DRAWINGS

Various embodiments will be more clearly understood from the following detailed description taken in conjunction with the accompanying drawings, in which:
FIG. 1 illustrates an example of a non-terrestrial network according to an embodiment;
FIG. 2 is a block diagram of a base station according to an embodiment;
FIG. 3 is a block diagram of a user terminal according to an embodiment;
FIG. 4 is a flowchart of an operating method of a base station, according to an embodiment;
FIG. 5 is a flowchart of an operating method by which a base station determines a primary satellite, according to an embodiment;
FIG. 6 is a flowchart of an operating method by which a base station determines a secondary satellite, according to an embodiment;
FIG. 7 is a flowchart of an operating method by which a base station changes a secondary satellite, according to an embodiment;
FIG. 8 is a flowchart of an operating method of a user terminal, according to an embodiment;
FIG. 9 is a signal exchange diagram of a non-terrestrial network according to an embodiment; and
FIG. 10 is a conceptual diagram of an Internet of Things (IoT) network system to which an embodiment is applied.

### DETAILED DESCRIPTION

Hereinafter, various embodiments will be described in detail with reference to the attached drawings.

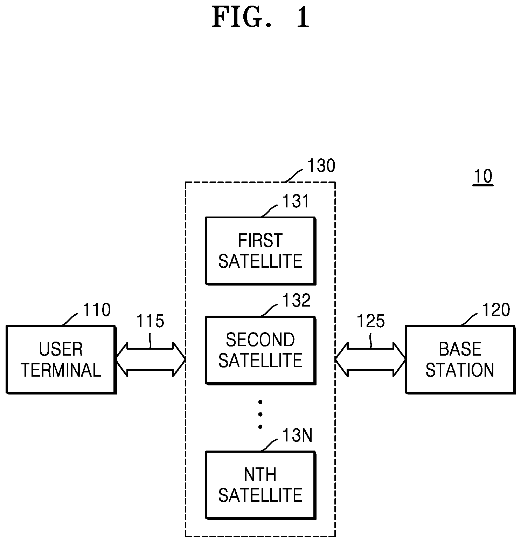

FIG. 1 illustrates an example of a non-terrestrial network 10 according to an embodiment.

Referring to FIG. 1, the non-terrestrial network 10 may include a user terminal 110, a base station 120, and a plurality of satellites 130.

The user terminal 110 is a device used by a user and may communicate with the base station 120 through a wireless channel. In addition to "terminal," the user terminal 110 may be alternatively referred to as a `user equipment (UE)', `mobile station', `subscriber station', `customer premises equipment (CPE)', `remote terminal', `wireless terminal', or `user device' or other terms with equivalent technical meaning. According to an embodiment, the user terminal 110 may establish at least one first link 115 with the plurality of satellites 130. For example, the user terminal 110 may simultaneously form a link with at least one satellite (e.g., a first satellite 131, and second satellite 132, to an Nth satellite 13N) among the plurality of satellites 130. The first link 115 between the user terminal 110 and the at least one satellite of the plurality of satellites 130 may be referred to as a service link.

The base station 120 is a network infrastructure device that provides wireless access to the user terminal 110. The base station 120 may have a coverage defined as a certain geographic region based on the distance over which signals may be transmitted. Referring to FIG. 1, the user terminal 110 may be farther away than the distance at which the base station 120 may directly transmit a signal and thus may be located outside the coverage of the base station 120. In addition to "base station," the base station 120 may be alternatively referred to as an `access point (AP)', `eNodeB (eNB)', 5th generation node (`SG node'), `wireless point' or with other terms that have equivalent technical meaning.

The base station 120 may be connected to one or more 'transmission/reception points (TRP)' through a second link 125 with the plurality of satellites 130. For example, the TRPs may be the first satellite 131, the second satellite 132, to the Nth satellite 13N, which correspond to the plurality of satellites 130. The base station 120 may transmit a downlink signal to the user terminal 110 or receive an uplink signal from the user terminal 110 through one or more TRPs. The second link 125 may include as many links as the number of satellites to which the base station 120 is connected. For example, when the base station 120 is connected to three satellites among the plurality of satellites 130, the second link 125 may include three links. The second link 125 may be referred to as a feeder link. When the base station 120 is connected to the first satellite 131, the second satellite 132, to the Nth satellite 13N, the second link 125 may include N links.

The plurality of satellites 130 including the first satellite 131, the second satellite 132, to the Nth satellite 13N may relay communication between the base station 120 and the user terminal 110. For example, the plurality of satellites 130 may receive data from the base station 120 through the second link 125 and transmit a downlink signal to the user terminal 110 through the first link 115.

According to an embodiment, each of the first satellite 131, the second satellite 132, to the Nth satellite 13N may be a geostationary orbit (GEO) satellite or a low earth orbit (LEO) satellite. GEO satellites maintain a fixed position in altitude and azimuth with respect to a particular Earth location at an altitude of approximately 35,000 km. Thus, in the case of a GEO satellite, the user terminal 110 may always view a GEO satellite floating at a fixed location. LEO satellites rotate around the earth at an altitude of about 300 km to 1,500 km. Thus, in the case of an LEO satellite, the user terminal 110 may communicate with the LEO satellite only during a certain period of time corresponding to a visibility time between the LEO satellite and the user terminal 110. In the embodiment described above, each of the first to Nth satellites 131 to 13N may be one of a GEO satellite or an LEO satellite but embodiments are not limited thereto. According to various embodiments, each of the first satellite 131 to the Nth satellite 13N may be one of a medium earth orbit (MEO) satellite, a high earth orbit (HEO) satellite, and an unmanned aircraft system (UAS) platform. That is, each of the first satellite 131 to the Nth satellite 13N may be one of a GEO satellite, an LEO satellite, a MEO satellite, a HEO satellite, and a UAS platform.

According to an embodiment, each of the first satellite 131 to the Nth satellite 13N may be a bent-pipe satellite or a regenerative satellite. Bent-pipe satellites may simply perform radio frequency filtering, frequency conversion, and signal amplification operations. For example, a bent-pipe satellite may receive a signal from the base station 120 and transmit the same to the user terminal 110 by performing only frequency filtering, frequency conversion, or amplification of the signal without decoding the received signal. A bent-pipe satellite may also be referred to as a transparent satellite. A regenerative satellite may perform at least some of switching, routing, modulation, demodulation, coding, and decoding, in addition to the operations of the bent-pipe satellite. For example, a regenerative satellite in low-earth orbit may decode a signal received from the base station 120, compensate for the high Doppler shift that occurs with the user terminal 110, and recode the signal and transmit the signal to the user terminal 110.

In the embodiments described above, GEO satellites and LEO satellites according to altitude, and bent-pipe satellites and regenerative satellites according to performable operations are described as criteria for distinguishing between the first satellite 131 to the Nth satellite 13N, but the criteria are not limited thereto. According to various embodiments, the first satellite 131 to the Nth satellite 13N may be distinguished from one another according to a moving speed of the satellite, a size of a coverage area of the satellite, or according to whether the satellite supports beamforming.

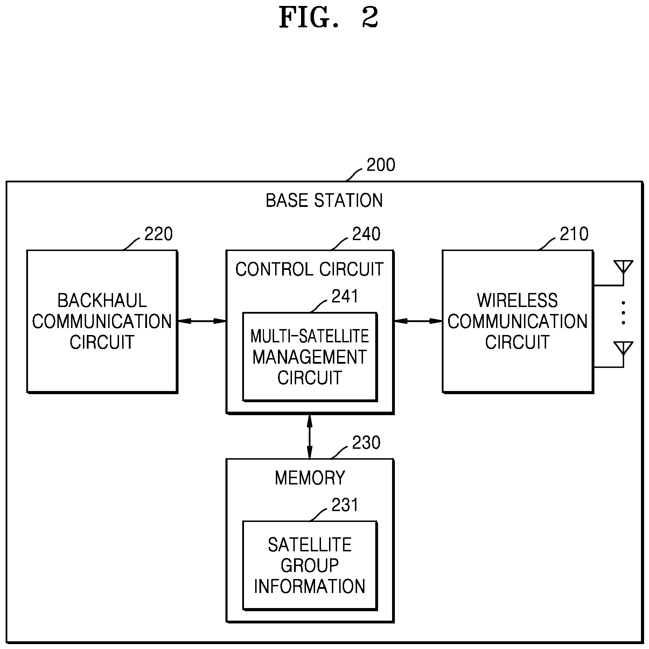

FIG. 2 is a block diagram of a base station 200 according to an embodiment.

Referring to FIG. 2, the base station 200 may include a wireless communication circuit 210, a backhaul communication circuit 220, a memory 230, and a control circuit 240. The base station 200 in FIG. 2 may correspond to the base station 120 in FIG. 1.

The wireless communication circuit 210 may perform functions for transmitting and receiving signals through a wireless channel. According to an embodiment, the wireless communication circuit 210 may perform a conversion function between a baseband signal and a bit string according to the physical layer standard of a system. For example, when transmitting data, the wireless communication circuit 210 may generate complex symbols by encoding and modulating a transmitted bit string, and when receiving data, the wireless communication circuit 210 may restore a received bit string by demodulating and decoding a baseband signal. The wireless communication circuit 210 may up-convert a baseband signal into a radio frequency (RF) band signal and transmit the signal through an antenna, or may down-convert an RF band signal received through an antenna, into a baseband signal. To this end, the wireless communication circuit 210 may include a transmission filter, a reception filter, an amplifier, a mixer, an oscillator, a digital to analog convertor (DAC), an analog to digital convertor (ADC), etc.

The wireless communication circuit 210 may transmit or receive signals. For example, the wireless communication circuit 210 may transmit a synchronization signal, a reference signal, system information, a message, control information, or data. In some embodiments, the wireless communication circuit 210 may perform beamforming. The wireless communication circuit 210 may apply a beamforming weight to a signal to provide directionality to the signal to be transmitted and received. The wireless communication circuit 210 may change the formed beam and transmit signals repeatedly. For example, the wireless communication circuit 210 may transmit and receive signals simultaneously with at least one of the plurality of satellites 130 of FIG. 1.

The backhaul communication circuit 220 may provide an interface for communicating with other nodes in a network. That is, the backhaul communication circuit 220 may convert a bit string transmitted from the base station 200 to another node, for example, another access node, another base station, a higher node, a core network, etc., into a physical signal, and convert a physical signal received from another node into a bit string.

The memory 230 may store data such as basic programs, application programs, and setting information for operation of the base station 200. The memory 230 may include volatile memory, non-volatile memory, or a combination of volatile memory and non-volatile memory. For example, the memory 230 may store satellite group information (or satellite cluster information). The satellite group information (or satellite cluster information) may be information in which a plurality of satellites are grouped, wherein the plurality of satellites are capable of performing a wireless connection with the user terminal 110 corresponding to any location information (e.g., altitude and azimuth) of a satellite among all satellites existing in orbit. For example, when the user terminal 110 is located at a first location, satellite group information (or satellite cluster information) provided to the user terminal 110 may include satellite information about GEO satellites that are always visible at the first location and LEO satellites that are visible at the first location at a specific time for a certain period of time.

The control circuit 240 may control the overall operations of the base station 200. For example, the control circuit 240 may transmit and receive signals through the wireless communication circuit 210 or the backhaul communication circuit 220. The control circuit 240 may write and read data to and from the memory 230. To this end, the control circuit 240 may include at least one processor.

According to an embodiment, the control circuit 240 may include a multi-satellite management circuit 241. The multi-satellite management circuit 241 may be implemented by the at least one processor of the control circuit 240 or by at least one of the at least one processor of the control circuit 240. The multi-satellite management circuit 241 may receive location information from the user terminal 110 and generate satellite group information by clustering, based on the location information, satellites that may provide a service link to the user terminal 110. The multi-satellite management circuit 241 may determine a primary satellite among a satellite cluster based on report information received from the user terminal 110 and satellite information, and may provide information about the primary satellite to the user terminal 110. The multi-satellite management circuit 241 may determine a secondary satellite (i.e., a satellite other than the primary satellite) among the satellite cluster and provide information about the secondary satellite to the user terminal 110. The information about the secondary satellite may include downlink (or uplink) scheduling information between the user terminal 110 and the secondary satellite. A detailed description of the operation of the multi-satellite management circuit 241 will be provided later.

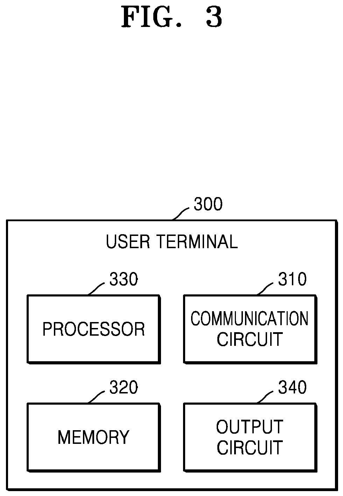

FIG. 3 is a block diagram of a user terminal 300 according to an embodiment.

Referring to FIG. 3, the user terminal 300 may include a communication circuit 310, a memory 320, a processor 330 and an output circuit 340. The user terminal 300 may correspond to the user terminal 110 of FIG. 1.

The communication circuit 310 performs functions for transmitting and receiving signals through a wireless channel. For example, the communication circuit 310 may perform a conversion function between a baseband signal and a bit string according to the physical layer standard of a system. For example, when transmitting data, the communication circuit 310 may generate complex symbols by encoding and modulating a transmitted bit string, and when receiving data, the communication unit 310 may restore a received bit string by demodulating and decoding a baseband signal. The communication circuit 310 may up-convert a baseband signal into an RF band signal and transmit the signal through an antenna, or may down-convert an RF band signal received through an antenna, into a baseband signal. For example, the communication circuit 310 may include one or more of a transmission filter, a reception filter, an amplifier, a mixer, an oscillator, a DAC, an ADC, etc. The communication circuit 310 may perform beamforming. The communication circuit 310 may apply a beamforming weight to a signal to provide directionality to the signal to be transmitted and received.

The communication circuit 310 may transmit or receive signals. The communication circuit 310 may receive a downlink signal. The downlink signal may include a synchronization signal (SS), a reference signal (RS), system information, a configuration message, control information, or downlink data.

The memory 320 may store data such as basic programs, application programs, and setting information for the operation of the user terminal 300. The memory 320 may include volatile memory, non-volatile memory, or a combination of volatile memory and non-volatile memory. The memory 320 may provide stored data according to a request from the processor 330.

The processor 330 may control overall operations of the user terminal 300. For example, the processor 330 may transmit and receive signals through the communication circuit 310. The processor 330 may write data to and read data to and from the memory 320. To this end, the processor 330 may include at least one processor or microprocessor, or may be part of a processor. When the processor 330 is part of the processor, part of the communication circuit 310 and the processor 330 may be referred to as a communication processor (CP). The output circuit 340 may provide an interface for communicating with other nodes in a network, such as a terrestrial network of which the user terminal 300 is a part.

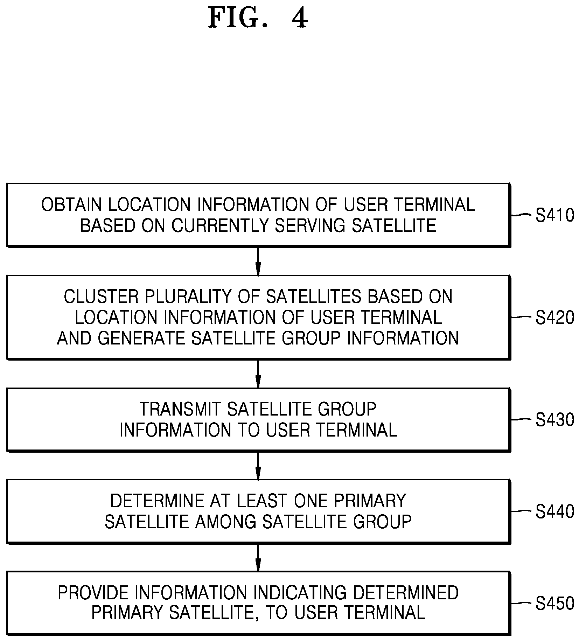

FIG. 4 is a flowchart of an operating method of the base station 200, according to an embodiment.

Referring to FIG. 4, in operation S410, the base station 200 may obtain location information of the user terminal 300 based on a currently serving satellite. In some embodiments, the base station 200 may obtain location information of the user terminal 300 from the currently serving satellite. The location information may indicate a specific location on the Earth's coordinate system expressed in altitude and azimuth. The base station 200 may receive global positioning system (GPS) coordinates directly from a satellite that has established a service link with the user terminal 300, or indirectly estimate the location of the user terminal 300 based on orbit information of a satellite that has established a constant service link.

In operation S420, the base station 200 may cluster a plurality of satellites based on the location information of the user terminal 300 to generate satellite group information of a satellite group of satellites to include in the cluster. The base station 200 may generate satellite group information by identifying satellites that may provide wireless communication by establishing a service link toward the location where the user terminal 300 is located, among a plurality of satellites located on a satellite orbit. For example, when the user terminal 300 is identified as being at a first location, the base station 200 may identify GEO satellites with coverage including the first location and LEO satellites in orbit that passes the coverage including the first location, and generate satellite group information where the identified GEO satellites and LEO satellites are grouped into one satellite group.

In operation S430, the base station 200 may provide (e.g. transmit through a satellite) satellite group information of the satellites in the satellite group to the user terminal 300. For example, in some embodiments, the base station 200 may transmit the satellite group information of the satellites in the satellite group to the user terminal 300 through radio resource control (RRC) signaling. However, the embodiment of transmitting satellite group information to the user terminal 300 is not limited to RRC signaling. According to various embodiments, the base station 200 may provide satellite group information for a plurality of satellites in advance, and each of the plurality of satellites may include the satellite group information in a master information block (MIB) and a system information block (SIB), and broadcast a synchronization signal block (SSB) including the MIB and the SIB in the SSB, or include the satellite group information in a media access control (MAC) control element (CE).

In operation S440, the base station 200 may determine at least one primary satellite among the satellite group. The primary satellite may refer to a satellite with which the user terminal 300 performs communication with highest priority among several satellites included in the satellite group. The base station 200 may determine the at least one primary satellite among several satellites included in the satellite group based on at least one of satellite information and report information. The satellite information is information for distinguishing between satellites and may include at least altitude information, speed information, information about transmission methods, beamforming information, and coverage information of each of the satellites in the satellite group. The report information may include signal to noise ratio (SINR), channel state information reference signal (CSI-RS) feedback information, Random Access Channel (RACH) resource, and SSB index received from the user terminal 300.

In operation S450, the base station 200 may provide (e.g. transmit through a satellite) information indicating the determined primary satellite, to the user terminal 300. For example in some embodiments, the base station 200 may provide the information indicating the determined primary satellite, to the user terminal 300 through RRC signaling. According to various embodiments, transmitting information about the primary satellite to the user terminal 300 is not limited to RRC signaling. For example, the base station 200 may enter an index indicating a specific satellite among a group of satellites, in the reserved field of downlink control information (DCI) and provide information indicating the determined primary satellite, to the user terminal 300.

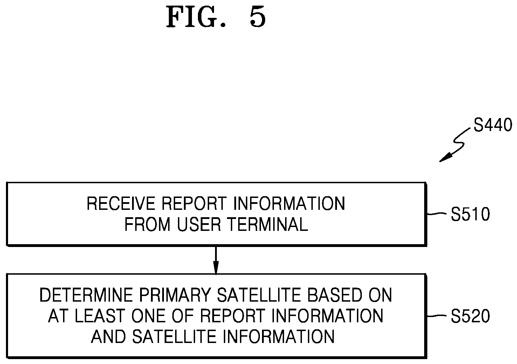

FIG. 5 is a flowchart of an operating method by which the base station 200 determines a primary satellite, according to an embodiment.

Referring to FIG. 5, in operation S510, the base station 200 may receive (e.g. transmitted through a satellite) report information from the user terminal 300. The report information may include SINR, CSI-RS feedback information, RACH resource, and/or SSB index.

In operation S520, the base station 200 may determine a primary satellite based on at least one of report information and satellite information.

According to an embodiment, the base station 200 may determine the at least one primary satellite based on satellite information. The satellite information may refer to information used to specify or distinguish satellites. For example, satellite information may include coverage information, altitude information, speed information, information about transmission methods, beamforming information, etc. of each satellite in the satellite group.

The coverage information is information indicating how wide the coverage area of a satellite is. For example, the number of antennas provided by the first satellite 131 may be fewer than the number of antennas provided by the second satellite 132. In this case, the size of the coverage area of the first satellite 131 may be smaller than the size of the coverage area of the second satellite 132. Determining a primary satellite based on coverage information may comprise selecting the satellite from the satellite group having a coverage area above a threshold coverage area and/or the satellite having the largest coverage area of the satellite group.

The altitude information is information indicating the height at which the satellite is located. For example, the first satellite 131 may be a GEO satellite and the second satellite 132 may be an LEO satellite. In this case, the first satellite 131 may be located at an altitude of approximately 35,000 km, and the second satellite 132 may be located at an altitude of approximately 500 km. The data rate when communicating with the first satellite 131 located higher may be lower than the data rate when communicating with the second satellite 132 located relatively close. Determining a primary satellite based on altitude information may comprise selecting the satellite from the satellite group having an altitude within a specified altitude range, below a first specified altitude or above a second specified altitude.

The speed information is information about how fast a satellite moves relative to the user terminal 300. The speed of a GEO satellite that appears stationary to the user terminal 300 may be 0. LEO satellites moving in low-earth orbit may have different movement speeds depending on altitude. For example, a satellite at an altitude of 700 km may move at a speed of 7.5 Km/s, and a satellite at an altitude of 10,000 km may move at a speed of 4.9 Km/s. Determining a primary satellite based on speed information may comprise selecting the satellite from the satellite group having a speed within a specified speed range, below a first specified speed or above a second specified speed.

The information about transmission methods is information indicating whether a satellite is a bent-pipe satellite or a regenerative satellite. The beamforming information is information indicating whether a satellite is capable of performing beamforming. For example, an LEO satellite capable of beamforming may have a relatively long service time for maintaining a service link with the user terminal 300 by changing the beam direction according to movement of the satellite. As another example, an LEO satellite which is not capable of beamforming inevitably has a relatively short service time for maintaining a service link with the user terminal, because the beam direction cannot be changed according to the movement of the satellite.

According to an embodiment, the base station 200 may determine at least one primary satellite based on at least two pieces of satellite information. For example, when the user terminal 300 requires a relatively high data rate, the base station 200 may select an LEO satellite located at a nearby altitude, and identify as a primary satellite, from among LEO satellites, an LEO satellite which is capable of beamforming and thus has a relatively long service period, and which includes a large number of antennas and thus has a broad coverage, and uses a regenerative transmission method in order to minimize the Doppler shift due to the high speed of the LEO satellite. As another example, when the user terminal 300 requests a stable communication connection (e.g., transmission and reception of control information), the base station 200 may select a GEO satellite that is always visible to the user terminal 300, and select a GEO satellite that as numerous antennas and thus has a broad coverage area, among GEO satellites and determine this GEO satellite as a primary satellite.

According to an embodiment, the base station 200 may determine at least one primary satellite among the satellite group based on report information that is received from the user terminal 300. The report information may include signal to noise ratio (SINR), channel state information reference signal (CSI-RS) feedback information, RACH resource, and/or SSB index received from the user terminal 300. For example, the base station 200 may compare the SINR of each satellite included in the satellite group and determine a satellite with a relatively high SINR as a primary satellite. As another example, the base station 200 may pre-allocate an SSB index or RACH resource to each of the satellites included in the satellite group such that they do not overlap each other. Thereafter, the base station 200 may determine a satellite corresponding to the SSB index determined by the user terminal 200 to be the best SSB, or a satellite corresponding to the pre-allocated RACH resource, as a primary satellite.

According to an embodiment, the base station 200 may determine at least one primary satellite among the satellites included in the satellite group based on both the report information that is received from the user terminal 300 and the satellite information. For example, the base station 200 may identify M satellites with high SINR based on report information that is received from the user terminal 300, select LEO satellites located at a nearby altitude among the M satellites, and identify, from among the LEO satellites, a satellite that is capable of beamforming and thus has a relatively long service period, that includes numerous antennas and thus has a large coverage area, and that employs a regenerative transmission method to minimize Doppler shift due to the high speed of the LEO satellite, based on the satellite information.

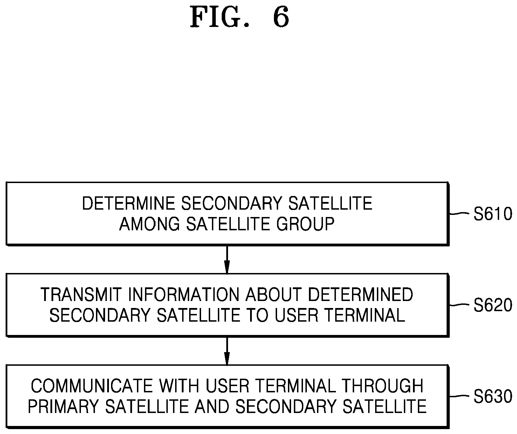

FIG. 6 is a flowchart of an operating method by which the base station 200 determines a secondary satellite, according to an embodiment.

Referring to FIG. 6, in operation S610, the base station 200 may determine a secondary satellite among the satellite group. A secondary satellite may refer to a satellite that performs communication to supplement communication with a primary satellite. For example, when a GEO satellite is selected as a primary satellite, the service link between the primary satellite and the user terminal 300 is robust but the data rate is low. Thus, the base station 200 may supplement and compensate for communication between the primary satellite and the user terminal 300 by setting an LEO satellite having a high data rate among the satellite group as a secondary satellite. However, the criteria for determining a secondary satellite are not limited to the embodiment described above, and both a primary satellite and a secondary satellite may be selected from GEO satellites or both may be selected from LEO satellites.

In operation S620, the base station 200 may provide (e.g. transmit through a satellite) information about the determined secondary satellite to the user terminal 300. For example, in some embodiments, the base station 200 may transmit the information about the determined secondary satellite to the user terminal 300 through RRC signaling of the primary satellite. According to various embodiments, transmitting information about the secondary satellite to the user terminal 300 is not limited to RRC signaling. For example, the base station 200 may enter an index indicating a specific satellite among a group of satellites in the reserved field of DCI and provide information indicating the determined secondary satellite, to the user terminal 300.

According to an embodiment, the information about the secondary satellite may further include scheduling information as well as index information indicating which satellite among the satellite group has been determined as the secondary satellite. The scheduling information may include frequency allocation information and time allocation information between the user terminal 300 and the secondary satellite. That is, the user terminal 300 may receive downlink (or uplink) scheduling information allocated to the secondary satellite by the base station 200 through the primary satellite. The scheduling information about the secondary satellite may be included in the DCI and transmitted to the user terminal 300. The user terminal 300 may decode the DCI of the primary satellite to determine which secondary satellite is among the satellite group and obtain information about the frequency and time allocated to perform downlink (or uplink) with the secondary satellite.

However, the information about the secondary satellite is not limited to the index and scheduling information indicating the secondary satellite, and may further include power control information of the user terminal 300, information about a downlink (or uplink) control channel, hybrid auto repeat and request (HARQ) ACK/NACK information, information related to channel feedback, information related to a measurement report, etc.

In operation S630, the base station 200 may communicate with the user terminal 300 through the primary satellite and the secondary satellite. According to an embodiment, the base station 200 may transmit or receive a control channel through a service link with a primary satellite. For example, the base station 200 may receive an ACK/NACK response to a downlink signal transmitted to the secondary satellite through a service link with the primary satellite. The base station 200 may transmit or receive a data channel through a service link with the secondary satellite.

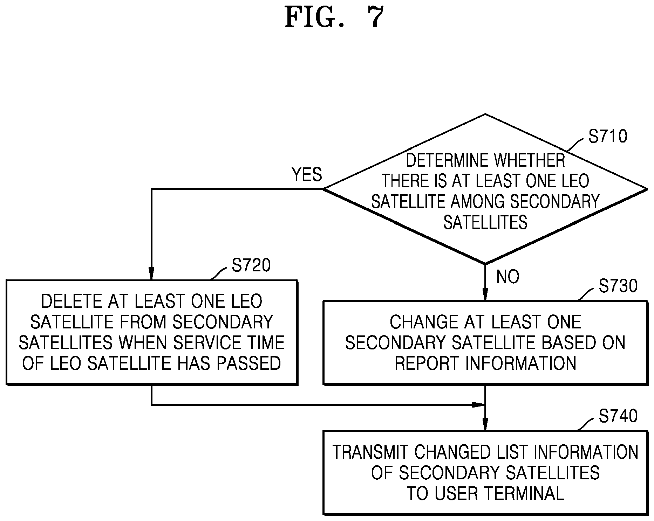

FIG. 7 is a flowchart of an operating method by which the base station 200 changes a secondary satellite, according to an embodiment.

Referring to FIG. 7, in operation S710, the base station 200 may determine whether there is at least one LEO satellite among secondary satellites. As described above, an LEO satellite is viewed as moving rather than stationary in the sky from the standpoint of the user terminal 300, and thus the time for establishing a service link is preset. If at least one LEO satellite is included among the secondary satellites (S710, YES), the base station 200 may proceed to operation S720.

In operation S720, the base station 200 may delete at least one LEO satellite from secondary satellites when the service time of the LEO satellite has passed. For example, an LEO satellite may be within the line of sight for about 10 minutes with respect to a particular location on the ground and thus form a service link, and after the service time has elapsed, the LEO satellite may only form a service link repeatedly for every certain period of time (e.g., every 90 minutes). Thus, when the service time corresponding to the LEO satellite has elapsed, the base station 200 may delete the corresponding LEO satellite from the secondary satellites. As another example, may add a LEO satellite having an upcoming service time to the list of secondary satellites.

If at least one LEO satellite is not included among the secondary satellites (S710, NO), the base station 200 may proceed to operation S730. In operation S730, the base station 200 may change at least one secondary satellite based on report information. For example, the SINR value for an arbitrary satellite among the plurality of secondary satellites may be lower than a threshold. The base station 200 may delete secondary satellites with lower SINR values than the threshold. As another example, the SINR value for an arbitrary satellite may exceed the threshold. The base station 200 may add a satellite with a SINR value exceeding the threshold to the list of secondary satellites. While operation S730 is provided as an alternative operation to operation 710, embodiments are not limited thereto. Operation S730 may additionally be performed after completion of operation S720 to remove at least one LEO secondary satellite from the list of satellites that has an SINR value below a threshold. Operation S730, when performed after operation S720, may be performed regardless of whether a LEO satellite has been removed from the list during operation S720. For example, there may be multiple LEO satellites within a service time and able to form a link, and operation S730 is configured to remove from the list of secondary satellites those LEO satellites with SINR values below a threshold.

In operation S740, the base station 200 may provide (e.g. transmit through a satellite) changed list information of secondary satellites to the user terminal 300. For example, the base station 200 may transmit the changed list information of the secondary satellites to the user terminal 300 through RRC signaling of the primary satellite. According to various embodiments, transmitting information about the primary satellite to the user terminal 300 is not limited to RRC signaling. For example, the base station 200 may enter an index indicating a specific satellite among the satellite group in the reserved field of the DCI and provide the user terminal 300 with information indicating the determined primary satellite.

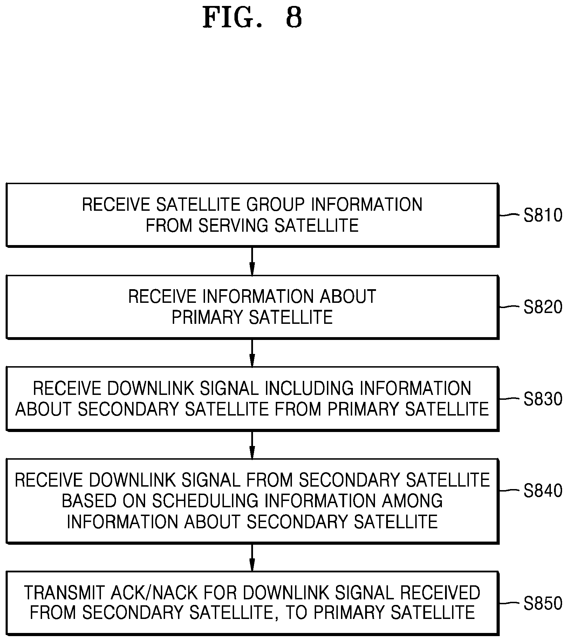

FIG. 8 is a flowchart of an operating method of the user terminal 300, according to an embodiment.

Referring to FIG. 8, in operation S810, the user terminal 300 may receive satellite group information from a serving satellite. For example, in some embodiments, the user terminal 300 may receive the satellite group information from the serving satellite through RRC signaling. The satellite group information may be information about a satellite group of satellites that have a coverage that includes the location of the user terminal 300. The user terminal 300 may not only receive the satellite group information through RRC signaling but also obtain the satellite group information by decoding the MIB and SIB included in the SSB broadcast from the base station 200, and receive the satellite group information through MAC CE.

In operation S820, the user terminal 300 may receive (e.g. transmitted through a satellite) information about the primary satellite. For example, in some embodiments, the user terminal 300 may receive the information about the primary satellite through RRC signaling. The primary satellite may correspond to a satellite that provides a high priority service link among satellites included in the satellite group. The user terminal 300 may not only receive information about the primary satellite through RRC signaling but also identify the primary satellite by referring to an index indicating which satellite in the satellite group, through the reserved field of DCI.

In operation S830, the user terminal 300 may receive a downlink signal including information about the secondary satellite from the primary satellite. The information about the secondary satellite may include at least one piece of information among index information indicating which satellite among the satellite group is the secondary satellite, scheduling information of a downlink (or uplink) for transmission and reception to and from the secondary satellite, power control information of the user terminal 300, downlink (or uplink) control channel information, HARQ ACK/NACK information, channel feedback-related information, and measurement report-related information.

In operation S840, the user terminal 300 may receive a downlink signal from the secondary satellite based on the scheduling information among the information about the secondary satellite. The user terminal 300 decodes the DCI of the primary satellite in operation S830 to obtain downlink scheduling information with respect to the secondary satellite. Accordingly, the user terminal 300 may receive a downlink signal from the secondary satellite according to the frequency information and time information allocated to the downlink link with respect to the secondary satellite.

In operation S850, the user terminal 300 may transmit ACK/NACK for the downlink signal received from the secondary satellite to the base station 200 through the primary satellite. Transmission of a control channel may be performed to the base station 200 through an uplink of the primary satellite.

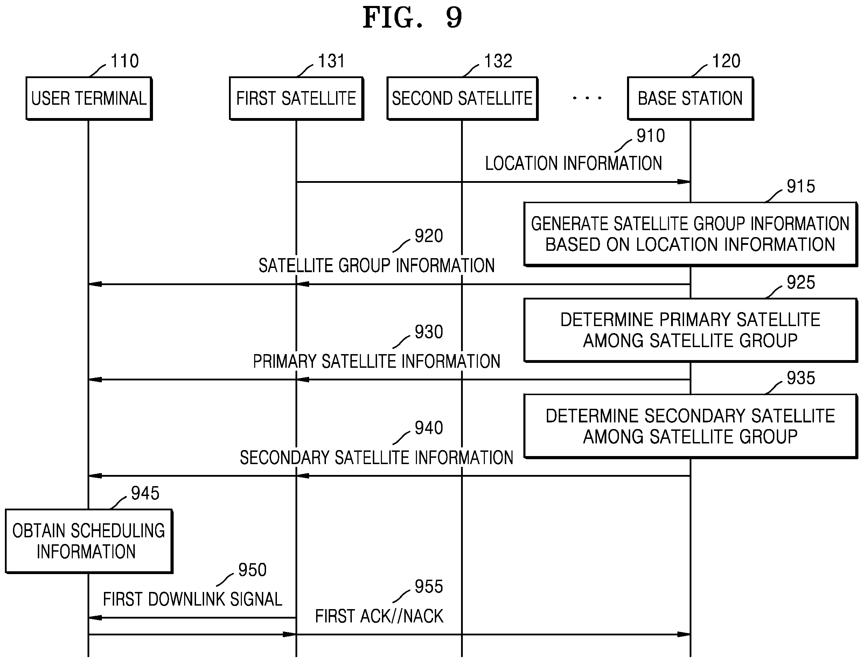

FIG. 9 is a signal exchange diagram of a non-terrestrial network according to an embodiment.

Referring to FIGS. 1 and 9, the first satellite 131 may provide location information to the base station 120 in operation 910. The location information may be information indicating the location of the user terminal 110. The first satellite 131 may be a serving satellite that is serving the user terminal 131 by previously establishing a service link to the user terminal 110.

The base station 120 may generate satellite group information based on the location information in operation 915. The base station 120 may generate satellite group information by grouping satellites with coverage that includes the area where the user terminal 110 is located, into one satellite group based on the location information.

The base station 120 may provide satellite group information to the user terminal 110, via the first satellite 131, in operation 920. The satellite group information may include satellite information of each of the satellites in the satellite group. The base station 120 may provide the satellite group information to the user terminal 110 based on at least one of RRC signaling, MIB, SSB including SIB, or MAC CE signaling.

The base station 120 may determine a primary satellite among a satellite group in operation 925. For example, the base station 120 may determine at least one primary satellite, based on satellite information such as altitude, speed, whether a satellite is capable of performing beamforming, a transmission method, and a coverage size of the satellite; and report information including channel quality between the user terminal 110 and the satellite.

The base station 120 may provide primary satellite information about the determined primary satellite to the user terminal 110, through the first satellite 131, in operation 930. The base station 120 may provide the user terminal 110 with information indicating the primary satellite determined through RRC signaling or determined by entering an index in a specific field of the DCI.

The base station 120 may determine a secondary satellite among the satellite group in operation 935. For example, the base station 120 may determine at least one secondary satellite, based on satellite information such as altitude, speed, whether a satellite is capable of beamforming, a transmission method, and a coverage size of the satellite; and report information including channel quality between the user terminal 110 and the satellite.

The base station 120 may provide secondary satellite information about the determined secondary satellite to the user terminal 110, through the first satellite 131, in operation 940. The base station 120 may provide the user terminal 110 with information indicating the secondary satellite determined through RRC signaling or determined by entering an index in a specific field of the DCI. The secondary satellite information may include not only an index indicating which satellite among the satellite group is the secondary satellite but also scheduling information for downlink between the user terminal 110 and the secondary satellite.

The user terminal 110 may obtain scheduling information by decoding the received secondary satellite information from the base station 120 in operation 945.

The user terminal 110 may receive a first downlink signal from the primary satellite in operation 950 and transmit ACK/NACK for the downlink signal to the base station 120 in operation 955. However, even ACK/NACK signals for downlink with the secondary satellite may be transmitted to the base station 120 through the primary satellite. In Figure 9, the first satellite 131 is illustrated as the primary satellite, but embodiments are not limited thereto. For example, although first satellite 131 is the satellite currently serving the user terminal 110, a different satellite may be selected as the primary satellite after operation 925. Similarly, while Figure 9 illustrates the use of the first satellite 131 to communicate satellite group information, primary satellite information, and secondary satellite information to the user terminal 110, embodiments are not limited thereto. Any other satellite from a plurality of satellites that can serve the user terminal 110 may be used instead. For example, after satellite group information is generated in operation 915 and provided to the user terminal 110 in operation 920, any satellite present in the satellite group may be used for subsequent communication between the base station 120 and the user terminal 110. Furthermore, after a primary satellite is determined in operation 925 and primary satellite information is provided to the user terminal 110 in operation 930, the primary satellite may be used for subsequent communication between the base station 120 and the user terminal 110.

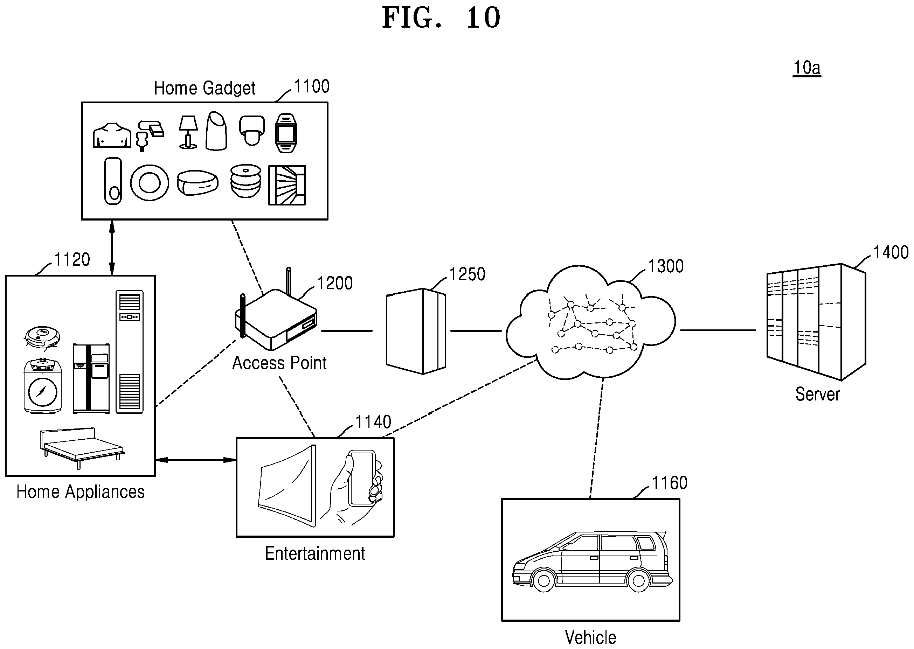

FIG. 10 is a conceptual diagram showing an Internet of Things (IoT) network system 10a to which an embodiment is applied.

Referring to FIG. 10, the IoT network system 10a may include a plurality of IoT devices 1100, 1120, 1140, and 1160, an access point 1200, a gateway 1250, a wireless network 1300, and a server 1400. The IoT may refer to a network between things using wired/wireless communication.

Each IoT device 1100, 1120, 1140, or 1160 may form a group according to the characteristics of each IoT device. For example, IoT devices 1100, 1120, 1140, or 1160 may be grouped into a plurality of groups. For example, the plurality of groups includes a home gadget group 1100, a home appliances/furniture group 1120, an entertainment group 1140, or a vehicle group 1160. The plurality of IoT devices 1100, 1120, and 1140 may be connected to a communication network through the access point 1200 or to other IoT devices. The access point 1200 may be built into a single IoT device. The gateway 1250 may change a protocol to connect the access point 1200 to an external wireless network. The IoT devices 1100, 1120, and 1140 may be connected to an external communication network through the gateway 1250. The wireless network 1300 may include the Internet and/or a public network. The plurality of IoT devices 1100, 1120, 1140, and 1160 may be connected to a server 1400 that provides a certain service through the wireless network 1300, and a user may use a service through at least one of the plurality of IoT devices 1100, 1120, 1140, and 1160.

According to the embodiments, the plurality of IoT devices 1100, 1120, 1140, and 1160 may perform a communication function through a primary satellite and a secondary satellite based on satellite group information in the non-terrestrial network 10 described with reference to FIGS. 1 to 9. That is, each of the plurality of IoT devices 1100, 1120, 1140, and 1160 may correspond to the user terminal 110 illustrated in FIG. 1. For example, the plurality of IoT devices 1100, 1120, 1140, and 1160 may be deployed in an area far from a terrestrial network. The plurality of IoT devices 1100, 1120, 1140, and 1160 are to communicate periodically, but since the size of an IoT packet is small, communication may be performed with a base station through a GEO satellite as a primary satellite.

While various embodiments have been particularly shown and described with reference to the drawings, it will be understood that various changes in form and details may be made therein without departing from the scope of the following claims.
Further Embodiments are set out in the following clauses:
Clause 1. An operating method of a base station, the operating method comprising:
   obtaining location information from a satellite serving a user terminal;
   based on the location information, generating satellite group information including information about a plurality of satellites in a satellite group;
   transmitting the satellite group information to the user terminal;
   determining a primary satellite among the plurality of satellites in the satellite group based on at least one of report information that is received from the user terminal and satellite information of each of the plurality of satellites in the satellite group; and
   providing information indicating the primary satellite to the user terminal.
Clause 2. The operating method of clause 1, wherein the plurality of satellites comprise at least some satellites capable of establishing a service link with the user terminal included in the location information.
Clause 3. The operating method of clause 1 or clause 2, wherein the satellite group information is transmitted to the user terminal based on at least one of radio resource control (RRC) signaling, broadcasting a synchronization signal block (SSB) including the satellite group information in a master information block (MIB) and a system information block (SIB) of the SSB, or media access control (MAC) control element (CE) signaling.
Clause 4. The operating method of any preceding clause, wherein the satellite information comprises at least one of altitude information, speed information, beamforming information, coverage information, and information about a transmission method indicating a bent-pipe or regenerative type, of a satellite, and
   the report information comprises at least one of signal to interference noise ratio (SINR) and channel state information reference signal (CSI-RS) feedback information.
Clause 5. The operating method of any preceding clause, further comprising:
   determining a secondary satellite based on satellites other than the primary satellite among the plurality of satellites in the satellite group; and
   transmitting information about the secondary satellite to the user terminal.
Clause 6. The operating method of clause 5, wherein the information about the secondary satellite is transmitted to the user terminal based on at least one of radio resource control (RRC) signaling and downlink control information (DCI).
Clause 7. The operating method of clause 5 or clause 6, wherein the information about the secondary satellite further comprises scheduling information for a downlink or an uplink between the user terminal and the secondary satellite.
Clause 8. The operating method of any one of clauses 5-7, further comprising:
   receiving report information about the secondary satellite;
   determining whether a channel quality for the secondary satellite is below a threshold; and
   deactivating the secondary satellite when the channel quality is below the threshold.
Clause 9. A base station device comprising:
   a wireless communication circuit configured to obtain location information from a satellite serving a user terminal;
   a control circuit configured to generate satellite group information including information about a plurality of satellites in a satellite group, based on the location information; and
   a memory configured to store the satellite group information,
   wherein the control circuit further comprises a multi-satellite management circuit configured to transmit the satellite group information to the user terminal, determine a primary satellite among the plurality of satellites based on at least one of report information that is received from the user terminal and satellite information about each of the plurality of satellites in the satellite group, and provide information indicating the primary satellite, to the user terminal.
Clause 10. The base station device of clause 9, wherein the plurality of satellites comprise at least some satellites capable of establishing a service link with the user terminal included in the location information.
Clause 11. The base station device of clause 9 or clause 10, wherein the satellite group information is transmitted to the user terminal based on at least one of radio resource control (RRC) signaling, broadcasting a synchronization signal block (SSB) including the satellite group information in a master information block (MIB) and a system information block (SIB) of the SSB, or media access control (MAC) control element (CE) signaling.
Clause 12. The base station device of any one of clauses 9 -11, wherein the satellite information comprises at least one of altitude information, speed information, beamforming information, coverage information, and information about a transmission method indicating a bent-pipe or a regenerative type, of a satellite, and
   the report information comprises at least one of signal to interference noise ratio (SINR) and channel state information reference signal (CSI-RS) feedback information.
Clause 13. The base station device of any one of clauses 9 - 12, wherein the multi-satellite management circuit is further configured to determine a secondary satellite based on satellites other than the primary satellite among the plurality of satellites in the satellite group, and transmit information about the secondary satellite to the user terminal.
Clause 14. The base station device of clause 13, wherein the information about the secondary satellite is transmitted to the user terminal based on at least one of radio resource control (RRC) signaling and downlink control information (DCI).
Clause 15. The base station device of clause 13 or clause 14, wherein the information about the secondary satellite further comprises scheduling information for a downlink or an uplink between the user terminal and the secondary satellite, and
   wherein the multi-satellite management circuit is further configured to receive report information about the secondary satellite, determine whether that a channel quality for the secondary satellite is below a threshold, and deactivate the secondary satellite when the channel quality is below the threshold.

## Claims

1. An operating method of a base station, the operating method comprising:
obtaining location information from a satellite serving a user terminal;
based on the location information, generating satellite group information including information about a plurality of satellites in a satellite group;
providing the satellite group information to the user terminal;
determining a primary satellite among the plurality of satellites in the satellite group based on at least one of report information that is received from the user terminal and satellite information of each of the plurality of satellites in the satellite group; and
providing information indicating the primary satellite to the user terminal.

2. The operating method of claim 1, wherein the plurality of satellites comprise at least some satellites capable of establishing a service link with the user terminal included in the location information.

3. The operating method of claim 1 or claim 2, wherein the satellite group information is transmitted to the user terminal based on at least one of radio resource control (RRC) signaling, broadcasting a synchronization signal block (SSB) including the satellite group information in a master information block (MIB) and a system information block (SIB) of the SSB, or media access control (MAC) control element (CE) signaling.

4. The operating method of any preceding claim, wherein the satellite information comprises at least one of altitude information, speed information, beamforming information, coverage information, and information about a transmission method indicating a bent-pipe or regenerative type, of a satellite, and
the report information comprises at least one of signal to interference noise ratio (SINR) and channel state information reference signal (CSI-RS) feedback information.

5. The operating method of any preceding claim, further comprising:
determining a secondary satellite based on satellites other than the primary satellite among the plurality of satellites in the satellite group; and
providing information about the secondary satellite to the user terminal.

6. The operating method of claim 5, wherein the information about the secondary satellite is transmitted to the user terminal based on at least one of radio resource control (RRC) signaling and downlink control information (DCI).

7. The operating method of claim 5 or claim 6, wherein the information about the secondary satellite further comprises scheduling information for a downlink or an uplink between the user terminal and the secondary satellite.

8. The operating method of any one of claims 5-7, further comprising:
receiving report information about the secondary satellite;
determining whether a channel quality for the secondary satellite is below a threshold; and
deactivating the secondary satellite when the channel quality is below the threshold.

9. A base station device comprising:
a wireless communication circuit configured to obtain location information from a satellite serving a user terminal;
a control circuit configured to generate satellite group information including information about a plurality of satellites in a satellite group, based on the location information; and
a memory configured to store the satellite group information,
wherein the control circuit further comprises a multi-satellite management circuit configured to provide the satellite group information to the user terminal, determine a primary satellite among the plurality of satellites based on at least one of report information that is received from the user terminal and satellite information about each of the plurality of satellites in the satellite group, and provide information indicating the primary satellite, to the user terminal.

10. The base station device of claim 9, wherein the plurality of satellites comprise at least some satellites capable of establishing a service link with the user terminal included in the location information.

11. The base station device of claim 9 or claim 10, wherein the satellite group information is transmitted to the user terminal based on at least one of radio resource control (RRC) signaling, broadcasting a synchronization signal block (SSB) including the satellite group information in a master information block (MIB) and a system information block (SIB) of the SSB, or media access control (MAC) control element (CE) signaling.

12. The base station device of any one of claims 9 - 11, wherein the satellite information comprises at least one of altitude information, speed information, beamforming information, coverage information, and information about a transmission method indicating a bent-pipe or a regenerative type, of a satellite, and
the report information comprises at least one of signal to interference noise ratio (SINR) and channel state information reference signal (CSI-RS) feedback information.

13. The base station device of any one of claims 9 - 12, wherein the multi-satellite management circuit is further configured to determine a secondary satellite based on satellites other than the primary satellite among the plurality of satellites in the satellite group, and transmit information about the secondary satellite to the user terminal.

14. The base station device of claim 13, wherein the information about the secondary satellite is provided to the user terminal based on at least one of radio resource control (RRC) signaling and downlink control information (DCI).

15. The base station device of claim 13 or claim 14, wherein the information about the secondary satellite further comprises scheduling information for a downlink or an uplink between the user terminal and the secondary satellite, and
wherein the multi-satellite management circuit is further configured to receive report information about the secondary satellite, determine whether that a channel quality for the secondary satellite is below a threshold, and deactivate the secondary satellite when the channel quality is below the threshold.
